# EUROPÄISCHE PATENTSCHRIFT

(11) **EP 1 007 395 B1**
(45) Veröffentlichungstag und Bekanntmachung des Hinweises auf die Patenterteilung: **09.05.2001**
(21) Anmeldenummer: 98947469.7
(22) Anmeldetag: 28.08.1998
(51) Int. Cl.: B60R 21/26

(54) **Gassackanordnung mit einem Teilausströmbereiche aufweisenden Gasleitgehäuse**
Gas bag arrangement with a gas guide housing comprising partial discharge areas
Ensemble coussin gonflable présentant un boîtier de guidage de gaz comportant des zones partielles d'evacuation

(30) Priorität: 02.09.1997 DE 19738204; 19.12.1997 DE 19757125
(43) Veröffentlichungstag der Anmeldung: 14.06.2000
(73) Patentinhaber: AUTOLIV DEVELOPMENT AB, 44783 Vargarda (SE)
(72) Erfinder: LEITNER, Mario, D-06369 Radegast (DE); BALSER, Werner, D-22149 Hamburg (DE); HÜTTE, Ulrike, D-81245 München (DE); WEISS, Franz-Xaver, D-85221 Dachau (DE)
(74) Vertreter: Müller, Karl-Ernst, Dr., Dipl.-Ing.
(86) Internationale Anmeldenummer: EP9805463
(87) Internationale Veröffentlichungsnummer: WO9911493

(56) Entgegenhaltungen:
- DE-A- 2 008 225
- DE-A- 19 736 243
- US-A- 2 850 291
- US-A- 3 871 684
- PATENT ABSTRACTS OF JAPAN vol. 097, no. 007, 31. Juli 1997 & JP 09 086332 A (TOYO TIRE &RUBBER CO LTD), 31. März 1997

## Beschreibung

Die Erfindung betrifft eine Gassackanordnung eines Sicherheitssystems in Kraftfahrzeugen mit einem Gasgenerator und einem daran angeschlossenen, über das vom Gasgenerator im Auslösefall erzeugte Gas zu entfaltenden und aufzublasenden Luftsack, wobei von dem Gasgenerator zwei getrennt auf das Luftsackgewebe einwirkende Teilgasströme ausgehen und ein das erzeugte Gas zu einem Gasausströmbereich leitendes Gehäuse vorgesehen ist und der Gasausströmbereich des Gehäuses durch zwei eine gleichgerichtete Ausströmrichtung für das erzeugte Gas ausbildende und in Ausströmrichtung des Gases aus dem Gehäuse räumlich zu dem angeschlossenen Luftsack versetzt angeordnete Teilausströmbereiche gebildet ist.

Eine Gassackanordnung mit den vorgenannten Merkmalen ist in der JP-A-09086332 beschrieben; das den Gasgenerator beinhaltende im Querschnitt runde Gehäuse ist gemeinsam mit dem eingefalteten Luftsack in einem U-förmigen Container angeordnet, wobei die Faltung des Luftsackes derart vorgenommen ist, daß eine Lage des Luftsackgewebes die offene Seite des Containers deckelartig abschließt. Das den Gasgenerator beinhaltende Gehäuse weist an seinem Umfang zwei Teilausströmbereiche auf, von denen ein Teilausströmbereich durch eine in der Symmetrieebene des Gehäuses angeordnete und auf eine geschlossene Seite des Containers in den eingefalteten Luftsack gerichtete Öffnung in der Gehäusewand gebildet ist; ein räumlich zu diesem ersten Teilausströmbereich versetzt angeordneter zweiter Teilausströmbereich ist durch eine von der ersten Öffnung umfangsmäßig beabstandete zweite Öffnung gebildet, die mittels eines radial abstehenden Leitbleches einen in etwa parallel zu dem aus dem ersten Teilausströmbereich austretenden Teilgasstrom gerichteten zweiten Teilgasstrom austreten läßt, der auf die der den Deckel des Containers bildenden Gewebelage des Luftsackes benachbarten Faltungslagen einwirkt. Mit der bekannten Gassackanordnung ist der Nachteil verbunden, daß die aus dem Gehäuse austretenden heißen Gase mit hohem Druck unmittelbar gegen die Gewebelage des Luftsackes anströmen und hier eine Beschädigung des Luftsackgewebes bewirken können.

Zum Schutze des Luftsackgewebes ist in der DE 21 50 744 C3 eine Ausgestaltung beschrieben, bei welcher der Gasgenerator zur zeitversetzten Erzeugung von zwei Teilgasströmen eingerichtet ist, von denen ein erster kleinerer Teilgasstrom zunächst den Luftsack aus einem Behälter ausstößt, während der zeitlich später freigesetzte zweite Teilgasstrom für das vollständige Aufblasen des Luftsackes sorgt. Zwar ist durch eine derartige Ausbildung schon das Risiko einer Beschädigung des Luftsackgewebes durch einen im Anfangsstadium mit hohem Druck auf das Luftsackgewebe auftreffenden Gasstrom gemindert, jedoch wirken sich in nachteiliger Weise Druckspitzen insbesondere im Zusammenhang mit der Zündung der zur Erzeugung der dem Aufblasen des-Luftsackes vorgesehenen Gasmenge dienenden Treibstoffanteile aus.

Der Erfindung liegt daher die Aufgabe zugrunde, bei einer Gassackanordnung der eingangs genannten Gattung den Schutz des Luftsackgewebes vor dem darauf auftreffenden Gasstrom zu verbessern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, daß ein erster Teilausströmbereich aus einem von dem Gehäuse abstehenden und in den zu entfaltenden Luftsack hineinreichenden Ausströmstutzen besteht und der zweite Teilausströmbereich von um den Ansatz des Ausströmstutzens angeordneten Öffnungen gebildet ist.

Mit der Erfindung ist der Vorteil verbunden, daß bei der Gaserzeugung entstehende Druckspitzen durch Drosselung und Aufteilung des erzeugten Gasstromes in dem Gehäuse abgebaut werden, wobei die in dem Stauraum anstehende Luft durch den mit hoher Geschwindigkeit freigesetzten Gasstrom durch die Öffnungen des Gasausströmbereiches gedrängt wird und hier ein für die Entfaltung des Luftsackes sorgendes Luftpolster bildet. Dabei strömt die im Stauraum anstehende Luft bei Auftreffen des Gases zunächst durch die Öffnungen des zweiten Teilausströmbereiches und bildet ein längs des abragenden Ausströmstutzens strömendes Luftpolster. Dieses Luftpolster sorgt nicht nur für ein schonendes Entfalten der angeschlossenen Bereiche des eingefalteten Luftsackgewebes, sondern ummantelt auch den aus dem Ausströmstutzen ausströmenden Teilgasstrom und schwächt dessen unmittelbaren Kontakt mit dem Luftsackgewebe ab.

Die Erfindung läßt sich in besonders vorteilhafter Weise auf Gassackanordnungen anwenden, bei denen der Gasgenerator im Kraftfahrzeug derart zu räumlich davon getrennt angeordneten Luftsäcken angeordnet ist, daß der Gasstrom beispielsweise über einen schlauchförmigen Verbindungsabschnitt zu dem aufzublasenden Luftsack geführt wird, wie dies beispielsweise für unterschiedliche Anwendungen in der DE 296 05 896 U1 oder der GB 2 297 950 A beschrieben ist. In diesem Fall ist der Verbindungsschlauch in besonderer Weise beansprucht, und diese Beanspruchung des im Ruhezustand ebenfalls eingefalteten Verbindungsschlauches wird bei Verwirklichung der Erfindung in besonderer Weise reduziert.

Nach einem Ausführungsbeispiel der Erfindung ist vorgesehen, daß der den ersten Teilausströmbereich bildende Ausströmstutzen zentral in einer Wandung des Gehäuses angeordnet ist und die den zweiten Teilausströmbereich bildenden Öffnungen den Ansatz des Ausströmstutzens ringförmig umgeben.

Soweit das vorstehend bezeichnete Ausführungsbeispiel der Erfindung von einer symmetrischen Ausbildung des Gasausströmbereiches mit den beiden Teilausströmbereichen ausgeht, kann nach einem Ausführungsbeispiel der Erfindung auch eine Anordnung getroffen sein, in welcher die beiden Teilausströmbereiche nebeneinander in der zugehörigen Wandung des Gehäuses angeordnet sind, indem ein erster Teilausströmbereich aus einem in asymmetrischer Anordnung von dem Gehäuse abstehenden und in den zu entfaltenden Luftsack hineinreichenden Ausströmstutzen besteht und der zweite Teilausströmbereich von in der zugeordneten Wandung des Gehäuses angeordneten Öffnungen gebildet ist.

Mit Blick auf eine Anwendung des Gassackes entsprechend der DE 296 05 896 U1 bzw. der GB 2 297 950 A ist bei einem Ausführungsbeispiel der Erfindung vorgesehen, daß das Gehäuse rohrförmig ausgebildet und der Gasausströmbereich an einer Stirnseite des Gehäuses angeordnet ist.

Nach einem Ausführungsbeispiel der Erfindung ist der Gassack über das stirnseitige Ende des rohrförmigen Gehäuses gezogen und auf der Außenseite des Gehäuses festgelegt.

In einer ersten Ausführungsform der Erfindung ist vorgesehen, daß in dem Gehäuse ein der Gaserzeugung dienender gesonderter Gasgenerator angeordnet und im Inneren des Gehäuses zwischen dem Gasgenerator und dem Gasausströmbereich ein Stauraum ausgebildet ist. Hiermit ist der Vorteil verbunden, daß bei Auslösung des Gasgenerators erzeugte Druckspitzen durch zusätzliche Umlenkung wie auch durch die Ausbildung des Stauraumes vor dem Gasausströmbereich zusätzlich abgebaut werden.

Das Auftreten von Druckspitzen wird gemäß einem Ausführungsbeispiel der Erfindung weiter dadurch vermindert, daß der Gasgenerator an seinem dem Ausströmbereich abgewandten Ende mit radialen Austrittsöffnungen versehen ist, so daß das von dem Gasgenerator in radialer Richtung dazu freigesetzte Gas in den Gasführungsbehälter in eine axiale Strömungsrichtung umgelenkt wird, bevor es durch den Gasausströmbereich des Gasführungsbehälters weiter abströmt.

In einer weiteren Ausführungsform der Erfindung ist vorgesehen, daß ein gaserzeugendes Material unmittelbar in einem Teil des Gehäuses angeordnet ist, wobei zwischen dem gaserzeugenden Material und dem Gasausströmbereich eine einen vor dem Gasausströmbereich gelegenen Stauraum abteilende Haltescheibe angeordnet ist. Diese Haltescheibe kann nach Ausführungsbeispielen der Erfindung entweder nur dem Fixieren des gaserzeugenden Materials in dem Gehäuse dienen oder zusätzlich eine Berstfunktion aufweisen.

Weiterhin kann vorgesehen sein, daß das Gehäuse an seinem Gasausströmbereich eine dem Stauraum zugewandte Prallscheibe aufweist, womit eine zu Beginn der Ausströmung des Gases aus dem Gehäuse auftretende Druckspitze zusätzlich gedrosselt werden kann.

In der Zeichnung sind Ausführungsbeispiele der Erfindung wiedergegeben, welche nachstehend beschrieben sind. Es zeigen:
- Fig. 1: ein Gehäuse mit darin angeordnetem Gasgenerator und Gasausströmbereich im Längsschnitt,
- Fig. 2: eine Schnittansicht nach Linie A - A in Figur 1,
- Fig. 3: den in dem Gehäuse angeordneten Gasgenerator in einer Einzeldarstellung
- Fig. 4: den Gasausströmbereich des Gehäuses gemäß Fig. 1 mit angeschlossenem Luftsack
- Fig. 5: das Gehäuse mit darin angeordnetem gaserzeugenden Material und Gasausströmbereich im Längsschnitt entsprechend Fig. 1
- Fig. 6: eine Schnittansicht nach Linie A - A in Fig. 5
- Fig. 7: den Gasausströmbereich des Gehäuses gemäß Fig. 5 mit angeschlossenem Luftsack.
- Fig. 8: ein anderes Ausführungsbeispiel des in Figuren 1 bzw. 5 dargestellten Gehäuses mit einer asymmetrischen Anordnung des einen Teilausströmbereichs in einer Seitenansicht,
- Fig. 9: den Gegenstand der Fig. 8 in einer Stirnansicht des Gasausströmbereichs

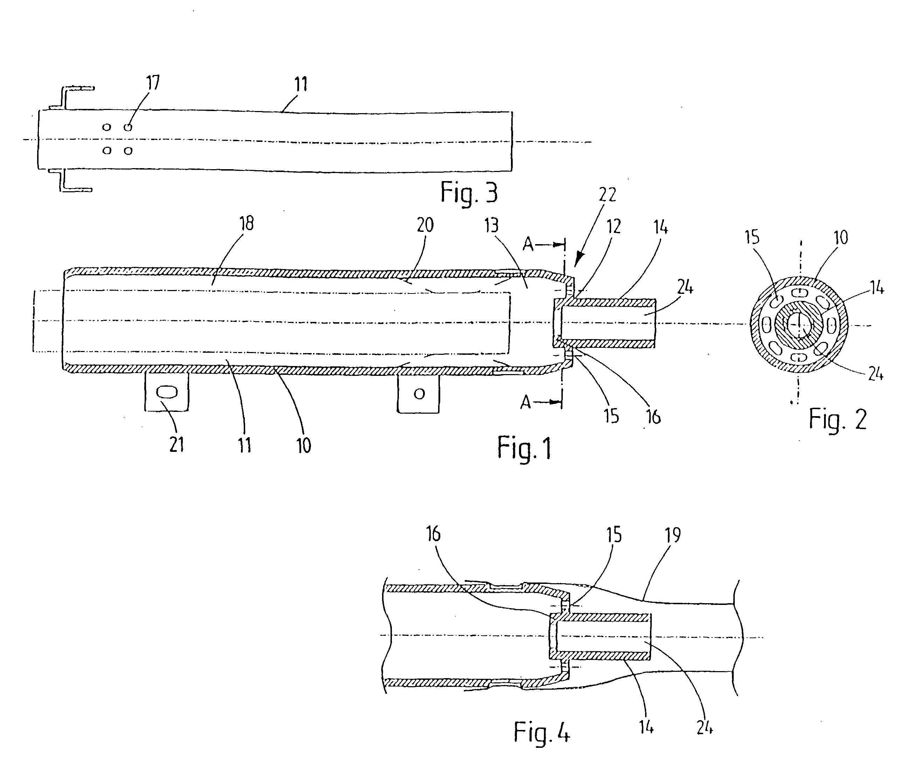

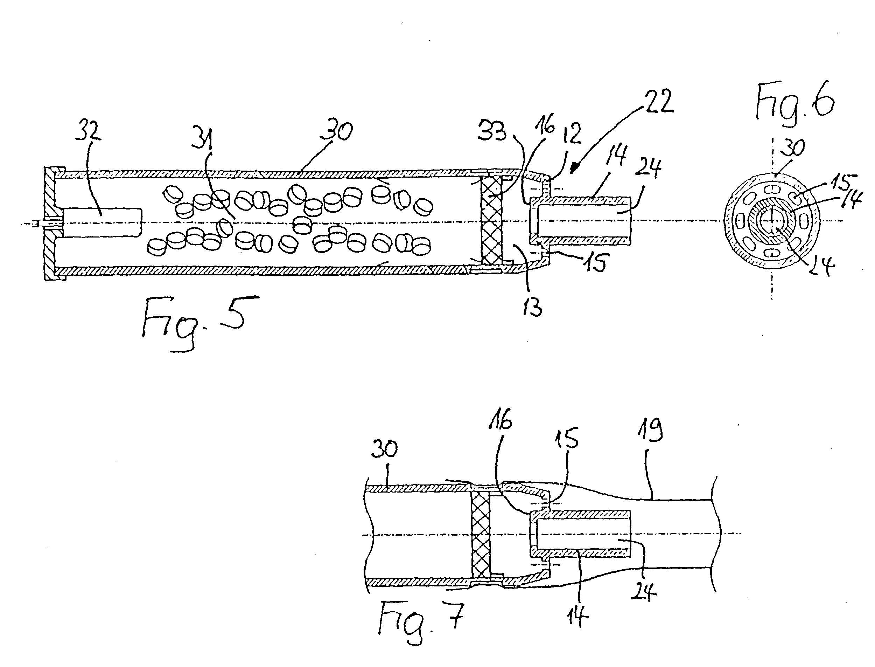

Wie sich aus Fig. 1 ergibt, ist der zu einer Gassackanordnung gehörige Gasgenerator 11 im Inneren eines rohrförmigen Gehäuse 10 angeordnet, welches an einer Stirnseite 12, an welcher auch der Luftsack 19 angeschlossen ist (Fig. 4), mit einem Gasausströmbereich 22 versehen. Auf der dem Gasausströmbereich 22 abgewandten Seite weist der Gasgenerator 11 radial angeordnete Austrittsöffnungen 17 auf, über welche bei Zündung des Gasgenerators das von diesem freigesetzte Gas in den zwischen dem Gasgenerator 11 und dem Gehäuse des rohrförmigen Gehäuses 10 bestehenden Ringraum 18 eintritt und hier längs des Gasgenerators 11 in Richtung auf den Gasausströmbereich 22 strömt. Zwischen der Stirnwand 12 des Gehäuses 10 und dem Ende des Gasgenerators 11 besteht ein Abstand, so daß sich ein Stauraum 13 ergibt.

Der in der Stirnwand 12 angeordnete Gasausströmbereich 22 besteht aus einem zentralen, von dem Gehäuse 10 axial abstehenden Ausströmstutzen 14 mit einer an dessen freien Ende ausgebildeten Ausströmöffnung 24 sowie aus den Ausströmstutzen 14 ringförmig umschließend angeordneten Ausströmöffnungen 15 in der Stirnwand 12 des Gehäuses 10. Dem aus dem Ausströmstutzen 14 und den Ausströmöffnungen 15 gebildeten Gasausströmbereich 22 ist dem Stauraum 13 zugewandt eine Prallscheibe 16 vorgelagert.

Der Gasgenerator 11 ist im Inneren des rohrförmigen Gehäuses 10 über einzelne Quetschrippen 20 festgelegt, wobei das Gehäuse 10 mittels außen an ihm sitzender Befestigungselemente 21 in dem dafür vorgesehenen Bereich des Kraftfahrzeuges befestigbar ist.

Wie sich aus Figur 4 ergibt, ist ein Luftsack 19 über die Stirnwand 12 des rohrförmigen Gehäuses 10 gezogen und auf der Außenseite des Gehäuses 10 beispielsweise über eine hier angebrachte Schlauchschelle befestigt.

Bei Auslösung des Gasgenerators 11 strömt das freigesetzte Gas radial durch die Austrittsöffnungen 17 aus dem Gasgenerator und wird durch das Gehäuse 10 in axialer Richtung umgelenkt; der Gasstrom trifft im Bereich der Stirnwand 12 auf die Prallscheibe 16 und wird hier gedrosselt. Durch den aus dem Ausströmstutzen 14 und den Ausströmöffnungen 15 bestehenden Gasausströmbereich 22 wird der Gasstrom in zwei Teilgasströme geteilt, die räumlich versetzt und damit auch zeitlich versetzt den Luftsack 19 beaufschlagen. Dabei wird die im Stauraum 13 zunächst befindliche Luft durch das einströmende Gas verdrängt und tritt insbesondere über die Ausströmöffnungen 15 in den eingefalteten Luftsack 19 ein und sorgt für dessen Entfaltung. Damit ist verhindert, daß das heiße Gas unmittelbar auf das Luftsackgewebe trifft. Gleichzeitig umschließt der axial fließende Luftstrom das im weiteren Verlauf aus dem Ausströmstutzen 14 ausströmende Gas und sorgt hier für ein Luftpolster und schwächt ebenfalls den unmittelbaren Kontakt des aus der Ausströmöffnung 24 des Ausströmstutzens 14 ausströmenden Gases mit dem Luftsackgewebe.

Über eine Auslegung der Geometrie der Ausströmöffnungen 15 einerseits und des Ausströmstutzens 14 andererseits können die beiden Teilgasströme eingestellt werden, wobei die Ausströmöffnungen 15 für eine Füllung des hinteren, dem Gehäuse 10 zugewandten Bereiches des Luftsackes sorgen, während das über den Ausströmstutzen 14 abströmende Gas in den dementsprechend vorderen Bereich des Luftsackes 19 gelangt.

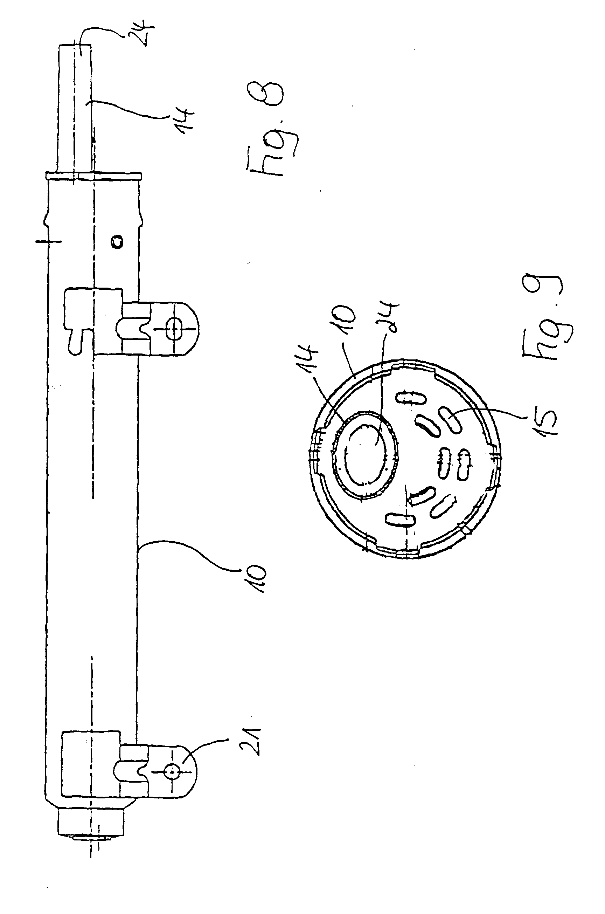

Das in den Figuren 5 bis 7 dargestellte Ausführungsbeispiel unterscheidet sich von dem vorstehend, anhand der Fig. 1 bis 4 erläuterten Ausführungsbeispiel nur dadurch, daß in dem Gehäuse 30 unmittelbar eine Menge von gaserzeugendem Material 31 angeordnet ist, so daß das Gehäuse 30 mit Material 31 selbst als Gasgenerator wirkt. In das Gehäuse 30 ragt von der einen Stirnseite her eine Zündvorrichtung 32 hinein, während an der der Zündvorrichtung 32 gegenüberliegenden Stirnwand 12 des Gehäuses 30 der Gasausströmbereich 22 mit dem daran angeschlossenen Luftsack 19 angeschlossen ist. Das gaserzeugende Material 31 ist gegen den Gasausströmbereich 22 mittels einer im Abstand dazu angeordneten und damit einen Stauraum 13 ausbildenden Haltescheibe 33 abgetrennt.

Im übrigen entspricht die Ausbildung des Gasausströmbereiches 22 mit der dem Stauraum 13 zugewandten Prallscheibe 16 eher zu den Fig. 1 bis 4 bereits erfolgten Beschreibung. Mit Auslösung des gaserzeugenden Materials 31 in dem Gasgeneratorgehäuse 30 strömt das freigesetzte Gas in Richtung auf die Stirnwand 12 und zerstört zunächst die Haltescheibe 33, wonach der Gasstrom auf die Prallscheibe 16 trifft und von hier aus in der beschriebenen Weise in zwei Teilgasströme geteilt wird und in den Luftsack 19 strömt.

Das in den Figuren 8 und 9 dargestellte Ausführungsbeispiel unterscheidet sich von den vorstehend beschriebenen Ausführungsbeispielen im wesentlichen dadurch, daß der axial von dem Gehäuse 10 abstehende Ausströmstutzen 14 nicht zentrisch in der Stirnwand 12 des Gehäuses angeordnet ist, sondern in einer asymmetrischen, aus der Mittenlängsachse des Gehäuses 10 versetzten Anordnung ausgebildet ist; demzufolge sind die den zweiten Teilausströmbereich bildenden Ausströmöffnungen 15 in der verbleibenden Teilfläche der Stirnseite 12 des Gehäuses 10 angeordnet.

## Patentansprüche

1. Gassackanordnung eines Sicherheitssystems in Kraftfahrzeugen mit einem Gasgenerator (11) und einem daran angeschlossenen, über das vom Gasgenerator (11) im Auslösefall erzeugte Gas zu entfaltenden und aufzublasenden Luftsack (19), wobei von dem Gasgenerator (11) zwei getrennt auf das Luftsackgewebe einwirkende Teilgasströme ausgehen und ein das erzeugte Gas zu einem Gasausströmbereich (22) leitendes Gehäuse (10, 30) vorgesehen ist und der Gasausströmbereich (22) des Gehäuses (10, 30) durch zwei eine gleichgerichtete Ausströmrichtung für das erzeugte Gas ausbildende und in Ausströmrichtung des Gases aus dem Gehäuse (10, 30) räumlich zu dem angeschlossenen Luftsack (19) versetzt angeordnete Teilausströmbereiche (14, 15) gebildet ist, dadurch gekennzeichnet, daß ein erster Teilausströmbereich aus einem von dem Gehäuse (10, 30) abstehenden und in den zu entfaltenden Luftsack (19) hineinreichenden Ausströmstutzen (14, 24) besteht und der zweite Teilausströmbereich von um den Ansatz des Ausströmstutzens (14, 24 ) angeordneten Öffnungen (15) gebildet ist.

2. Gassackanordnung nach Anspruch 1, dadurch gekennzeichnet, daß der den ersten Teilausströmbereich bildende Ausströmstutzen (14) zentral in einer Wandung des Gehäuses (10, 30) angeordnet ist und die den zweiten Teilausströmbereich bildenden Öffnungen (15) den Ansatz des Ausströmstutzens (14) ringförmig umgeben.

3. Gassackanordnung nach Anspruch 1, dadurch gekennzeichnet, daß der den ersten Teilausströmbereich bildende Ausströmstutzen (14, 24) in einer asymmetrischen Anordnung an einer Wandung des Gehäuses (10) angeordnet ist und die den zweiten Teilausströmbereich ausbildenden Öffnungen (15) in der Wandung des Gehäuses (10, 30) ausgebildet sind.

4. Gassackanordnung nach einem der Ansprüche 1 bis 3, dadurch gekennzeichnet, daß das Gehäuse (10, 30) rohrförmig ausgebildet und der Gasausströmbereich (22) an einer Stirnseite (12) des Gehäuses (10, 30) angeordnet ist.

5. Gassackanordnung nach einem der Ansprüche 1 bis 4, dadurch gekennzeichnet, daß der Luftsack (19) über das stirnseitige Ende des rohrförmigen Gehäuses (10, 30) gezogen und auf der Außenseite des Gehäuses (10, 30) festgelegt ist.

6. Gassackanordnung nach einem der Ansprüche 1 bis 5, dadurch gekennzeichnet, daß in dem Gehäuse (10) ein der Gaserzeugung dienender gesonderter Gasgenerator (11) angeordnet und im Inneren des Gehäuses (10) zwischen dem stirnseitigen Ende des Gasgenerators (11) und dem an der Stirnseite (12) des Gehäuses (10, 30) angeordneten Gasausströmbereich (22) ein Stauraum (13) ausgebildet ist.

7. Gassackanordnung nach Anspruch 6, dadurch gekennzeichnet, daß der Gasgenerator (11) an seinem dem Gasausströmbereich (22) gegenüberliegenden Ende radiale Austrittsöffnungen (17) aufweist.

8. Gassackanordnung nach einem der Ansprüche 1 bis 5, dadurch gekennzeichnet, daß ein gaserzeugendes Material (31) unmittelbar in einen Teil des Gehäuses (30) angeordnet ist, wobei zwischen dem gaserzeugenden Material (31) und dem Gasausströmbereich (22) eine einen vor dem Gasausströmbereich (22) gelegenen Stauraum (13) abteilende Haltescheibe (33) angeordnet ist.

9. Gassackanordnung nach Anspruch 8, dadurch gekennzeichnet, daß die Haltescheibe (33) als Berstscheibe ausgebildet ist.

10. Gassackanordnung nach einem der Ansprüche 6 bis 9, dadurch gekennzeichnet, daß das Gehäuse (10, 30) an seinem Gasausströmbereich (22) eine dem Stauraum (13) zugewandte Prallscheibe (16) aufweist.

## Claims

1. Gas bag arrangement for a motor vehicle safety system comprising a gas generator (11) and an airbag (19) connected thereto that unfolds and becomes inflated by the gas produced by the gas generator (11) when triggered, two partial gas flows exiting from the gas generator (11) and acting separately upon the material of the airbag, further a housing (10, 30) being provided that conducts the gas produced towards a gas discharge area (22), said gas discharge area (22) of said housing (10, 30) constituting two partial discharge areas (14, 15) forming a single direction of discharge flow for the gas produced and arranged in staggered positions in the direction of gas discharged from said housing (10, 30) in relation to the connected airbag (19), characterized in that a first partial discharge area comprises a discharge part (14, 24) that projects out of said housing (10, 30) and that extends into said airbag (19) to the unfolded, and the second partial discharge area constitutes openings (15) that are arranged around the neck of the discharge part (14, 24).

2. Gas bag arrangement in accordance with claim 1, characterized in that the discharge part (14) forming the first partial discharge area is situated in a central arrangement in a wall of the housing (10, 30) and the openings (15) forming the second partial discharge area are arranged in a circle surrounding the neck of the discharge part (14).

3. Gas bag arrangement in accordance with claim 1, characterized in that the discharge part (14, 24) forming the first partial discharge area is situated in an asymmetrical arrangement in a wall of the housing (10) and the openings (15) forming the second partial discharge area are arranged in the wall of said housing (10, 30).

4. Gas bag arrangement in accordance with claims 1 through 3, characterized in that said housing (10, 30) is tubular in shape and furthermore characterized in that said gas discharge area (22) is arranged at one end (12) of said housing (10, 30).

5. Gas bag arrangement in accordance with any of claims 1 through 4, characterized in that said airbag (19) is drawn over the end of said tubular housing (10, 30) and fixed on the exterior of said housing (10, 30).

6. Gas bag arrangement in accordance with any of claims 1 through 5, characterized in that a separate gas generator (11) for producing gas is arranged in said housing (10) and that a retention chamber (13) is formed in the interior of said housing (10) between the gas generator (11) and said gas discharge area (22).

7. Gas bag arrangement in accordance with claim 6, characterized in that said gas generator (11) comprises radial exit openings (17) at its end that faces away from said discharge area (22).

8. Gas bag arrangement in accordance with any of claims 1 through 5, characterized in that a gas-producing material (31) is arranged directly in a section of said housing (30), wherein a retaining disk (33) separates said gas-producing material 31 and said gas discharge area (22) from a retention chamber (13) located in front of said gas discharge area (22).

9. Gas bag arrangement in accordance with claim 8, characterized in that said retaining disk (33) comprises a burst disk.

10. Gas bag arrangement in accordance with any of claims 6 through 9, characterized in that said housing (10, 30) comprises at its gas discharge area (22) a baffle disk (16) that faces said retention chamber (13).

## Revendications

1. Système de coussin gonflable pour un équipement de sécurité destiné à des véhicules automobiles, comprenant un générateur de gaz (11) et un coussin à air (19) qui lui est raccordé et qui se déplie et se gonfle par l'intermédiaire du gaz produit par le générateur de gaz (11) en cas de déclenchement, deux flux gazeux partiels, destinés à agir séparément sur la structure du coussin à air, sortant du générateur de gaz (11), et un boîtier (10, 30) étant prévu qui guide le gaz produit vers une zone d'évacuation du gaz (22), et la zone d'évacuation du gaz (22) dans le boîtier (10, 30) est formée par deux zones d'évacuation de flux partiels (14, 15), qui donnent au gaz produit une direction de flux orientée dans le même sens et qui sont décalées dans l'espace par rapport au coussin à air (19) raccordé dans le sens du flux gazeux sortant du boîtier (10, 30), caractérisé en ce qu'une première zone d'évacuation de flux partiel est formée par une tubulure d'évacuation (14, 24) qui s'avance en saillie au-delà du boîtier (10, 30) et qui s'étend jusque dans le coussin à air (19) à déplier, et la deuxième zone d'évacuation de flux partiel est formée par des orifices (15) disposés autour de la saillie de la tubulure d'évacuation (14, 24).

2. Système de coussin gonflable selon la revendication 1, caractérisé en ce que la tubulure d'évacuation (14) qui forme la première zone d'évacuation de flux partiel est disposée au milieu d'une paroi du boîtier (10, 30) et les orifices (15) qui forment la deuxième zone d'évacuation de flux partiel sont disposés en forme d'anneau autour de la saillie de la tubulure d'évacuation (14).

3. Système de coussin gonflable selon la revendication 1, caractérisé en ce que la tubulure d'évacuation (14, 24) qui forme la première zone d'évacuation de flux partiel est disposée dans une position asymétrique contre une paroi du boîtier (10) et les orifices (15) formant la deuxième zone d'évacuation de flux partiel sont réalisés dans la paroi du boîtier (10, 30).

4. Système de coussin gonflable selon l'une quelconque des revendications 1 à 3, caractérisé en ce que le boîtier (10, 30) est conçu en forme de tube et la zone d'évacuation du gaz (22) est disposée sur une face frontale (12) du boîtier (10, 30).

5. Système de coussin gonflable selon l'une quelconque des revendications 1 à 4, caractérisé en ce que le coussin à air (19) est tendu au-dessus de l'extrémité frontale du boîtier (10, 30) en forme de tube et est fixé contre la face extérieure du boîtier (10, 30).

6. Système de coussin gonflable selon l'une quelconque des revendications 1 à 5, caractérisé en ce qu'un générateur de gaz (11) séparé, destiné à produire le gaz, est monté dans le boîtier (10) et un compartiment de retenue (13) est formé à l'intérieur du boîtier (10) entre le générateur de gaz (11) et la zone d'évacuation du gaz (22).

7. Système de coussin gonflable selon la revendication 6, caractérisé en ce que le générateur de gaz (11), sur son extrémité opposée à la zone d'évacuation du gaz (22), est muni d'orifices de sortie (17) radiaux.

8. Système de coussin gonflable selon l'une quelconque des revendications 1 à 5, caractérisé en ce qu'un matériau (31) produisant du gaz est disposé directement dans une partie du boîtier (30), un disque de blocage (33), qui délimite le compartiment de retenue (13) situé en amont de la zone d'évacuation du gaz (22), étant disposé entre le matériau (31) produisant le gaz et la zone d'évacuation du gaz (22).

9. Système de coussin gonflable selon la revendication 8, caractérisé en ce que le disque de blocage (33) est conçu sous forme de disque de rupture.

10. Système de coussin gonflable selon l'une quelconque des revendications 6 à 9, caractérisé en ce que le boîtier (10, 30) dans sa zone d'évacuation du gaz (22) est muni d'un diaphragme (16) orienté vers le compartiment de retenue (13).
